**Europäisches Patentamt**

**European Patent Office**

**Office européen des brevets**

(11) Veröffentlichungsnummer: **0 152 775**
A2

# (12) EUROPÄISCHE PATENTANMELDUNG

(21) Anmeldenummer: 85100554.6

(22) Anmeldetag: 19.01.85

(51) Int. Cl.⁴: **F 02 M 61/18**

(30) Priorität: 18.02.84 DE 3405866

(43) Veröffentlichungstag der Anmeldung: 28.08.85
Patentblatt 85/35

(84) Benannte Vertragsstaaten: AT CH DE FR GB IT LI NL SE

(71) Anmelder: Deutsche Forschungs- und Versuchsanstalt
für Luft- und Raumfahrt e.V., D-5300 Bonn (DE)

(72) Erfinder: Wiegand, Herbert, Dipl.-Ing.,
Barbarastrasse 29, D-5000 Köln 90 (DE)
Erfinder: Bäumer, Klaus, Dipl.-Ing., Buschweg 20,
D-5300 Bonn 3 (DE)

(74) Vertreter: Selting, Günther, Dipl.-Ing. et al,
Deichmannhaus am Hauptbahnhof, D-5000 Köln 1 (DE)

(54) Strahleinspritzvorrichtung für einen Dieselmotor.

(57) Bei der Strahleinspritzvorrichtung sind mehrere Spritzlöcher (11, 12) so angeordnet, daß die aus diesen Spritzlöchern austretenden Einspritzstrahlen im Brennraum aufeinanderprallen und eine Staufläche bilden. Dadurch wird eine kontinuierliche, schnellere und bessere Ausnutzung des Strahlimpulses erreicht.

EP 0 152 775 A2

## Strahleinspritzvorrichtung für einen Dieselmotor

Die Erfindung betrifft eine Strahleinspritzvorrichtung für einen Dieselmotor, insbesondere mit direkter Einspritzung, mit mindestens einem in einen Brennraum hineinragenden Düsenkörper, der einen durch eine gesteuert bewegbare Düsennadel absperrbaren und freigebbaren Kanal aufweist, und mit mindestens zwei Spritzlöchern, deren Flüssigkeitsstrahlen sich im Brennraum vereinigen.

Bei Dieselmotoren wird der Kraftstoff unter hohem Druck in den Brennraum eingespritzt, in welchem sich die zuvor verdichtete und dadurch hocherhitzte Luftladung befindet. Zur guten Vermischung des Kraftstoffes mit der Luft erfolgt die Einspritzung durch Ein- und Mehrlochdüsen. Die Gemischbildung kann durch zusätzliche Luftbewegung unterstützt werden, die durch besondere Formgebung des Brennraumes erzielt wird. Dabei hat sich gezeigt, daß am Impuls- und Stoffaustausch zwischen

0152775

Luft und Kraftstoff hauptsächlich die Strahlspitze des Kraftstoffstrahles beteiligt ist. Dies hat zur Folge, daß die Durchmischung nicht durch einfache Steigerung des Einspritzdruckes verbessert werden kann.

Bei einer bekannten Strahleinspritzvorrichtung der eingangs genannten Art (CH-A- 432 125) sind die Spritzlöcher an dem Düsenkörper paarweise angeordnet und die Spritzlöcher eines Paares liegen so dicht beieinander, daß der von ihnen eingespritzte Brennstoff als ein gemeinsamer Brennstoffstrahl erscheint bzw. wirkt. Die Richtungen und Abmessungen der Einspritzlöcher können etwas gegeneinander verändert sein, so daß die Einspritzrichtungen eine geringe Winkeldifferenz gegeneinander haben. In jedem Fall wird von zwei Einspritzlöchern ein gemeinsamer Einspritzstrahl erzeugt.

Ferner ist es bekannt, die Einspritzlöcher eines Düsenkörpers mit Saugkanälen zu versehen, durch die beim Einspritzvorgang Gas aus dem Brennraum angesaugt wird (DE-A- 26 10 927).

Der Erfindung liegt die Aufgabe zugrunde eine Strahleinspritzvorrichtung der eingangs genannten Art zu schaffen, die eine Verbesserung der Verbrennung im Dieselmotor durch eine kontinuierliche, schnellere und gründlichere Vermischung von Luft und Kraftstoff bewirkt.

Zur Lösung dieser Aufgabe ist erfindungsgemäß vorgesehen, daß die Spritzlöcher so geneigt oder gegeneinander gerichtet sind, daß die aus ihnen austretenden Flüssigkeitsstrahlen, eine Staufläche bildend, aufeinanderprallen.

Nach der Erfindung werden die aus zwei Spritzlöchern aus einem oder zwei Düsenkörpern austretenden Einspritzstrahlen so geführt, daß sie in einem vorgegebenen Abstand von den Spritzlöchern aufeinanderprallen und eine Staufläche bilden. Dadurch wird eine kontinuierliche, schnellere und bessere Ausnutzung des Strahlimpulses erreicht. Hierbei erfolgt auch bei Verwendung von zwei Düsenkörpern die Kraftstoffversorgung von der Einspritzpumpe über eine gemeinsame Einspritzleitung.

Es entstehen also stochastische Bewegungen in der Flüssigkeit zu beiden Seiten der Staufläche, wodurch ein Raum kräftiger Durchmischung entsteht (VDI-Nachrichten Nr. 14/8. April 1983, S. 29).

Die Erfindung ist nicht auf Strahleinspritzvorrichtungen mit zwei Spritzlöchern beschränkt, sondern der Düsenkörper kann auch mit mehreren, paarig einander zugeordneten Spritzlöchern versehen sein, so daß die aus den Spritzlöchern austretenden Einspritzstrahlen in verschiedenen Ebenen des Brennraumes freie Stauflächen bilden und dadurch die Entstehung einer Schichtladung begünstigen.

Gemäß einer vorteilhaften Ausführungsform der Erfindung steht von den paarweise einander zugeordneten Spritzlöchern davon ein Spritzloch über eine Schlitzdüse mit dem Brennraum in Verbindung (P 32 41 679.2). Hierdurch wird erreicht, daß der aus diesem Spritzloch austretende Kraftstoffstrahl verdichtete und erhitzte Luft aus dem Brennraum ansaugt, so daß diesem Einspritzstrahl durch die angesaugte Luft soviel Energie entzogen wird, daß der Strahl "weicher" wird. Dadurch wird beim Auftreffen des "harten Strahles" auf den "weichen Strahl" eine besonders günstige Art der Gemischbildung erzielt. Durch geeignete Ausbildung und Bemessung der Ejektorschlitzdüse kann dem "weichen Strahl"soviel Luft zugeführt werden, daß der von diesem Strahl abdampfende Kraftstoff räumlich gezielt im Totwassergebiet des "harten Strahles" zur Entzündung kommt. Hierbei wirkt der "harte Strahl" bis kurz vor Einspritzende als Flammhalter, so daß mit dieser Maßnahme Einfluß auf den Ort der Verbrennung ausgeübt werden kann, was zur Verminderung der Schadstoffbildung, insbesondere von $NO_x$ von Bedeutung ist. Die $NO_x$-Bildung kann u.a. nachgewiesenermaßen dadurch vermindert werden, daß entweder zu hohe Gastemperaturen vermieden werden oder die Verweilzeit der Brenngase bei hohen Temperaturen sehr kurz gehalten wird.

Ausführungsbeispiele der Erfindung unter Verwendung eines Düsenkörpers und von zwei Düsenkörpern sind in den Zeichnungen dargestellt und werden im folgenden näher erläutert.

Es zeigen:

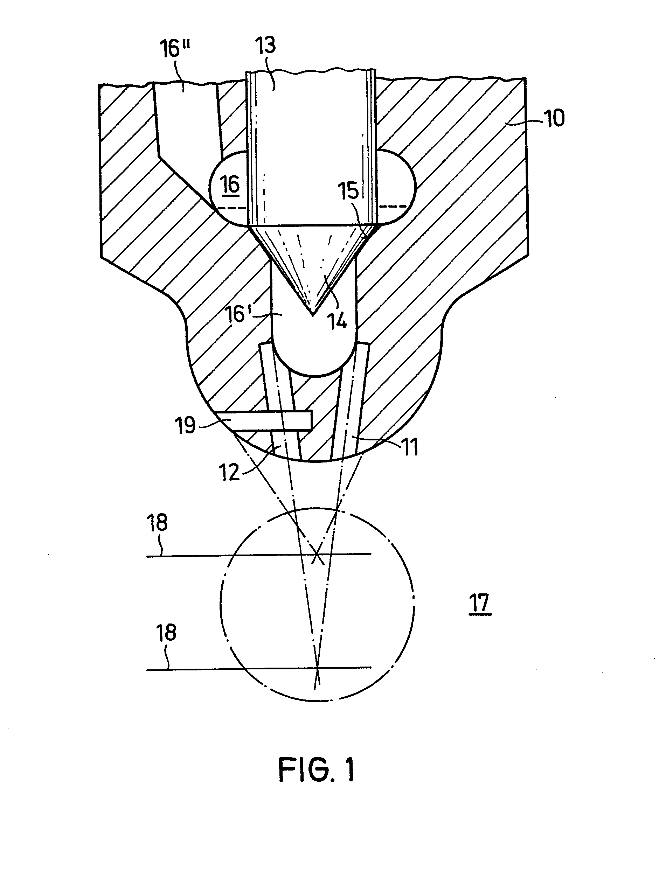

Fig. 1 einen Längsschnitt durch eine Strahleinspritzvorrichtung,

Fig. 2 eine Ansicht der Vorrichtung aus dem Brennraum heraus und

Fig. 3 einen Längsschnitt der Strahleinspritzvorrichtung mit zwei Düsenkörpern.

Die Einspritzvorrichtung besteht aus dem Düsenkörper 10, der sich zu seinem vorderen Ende hin verjüngt und an diesem vorderen Ende die Spritzlöcher 11 und 12 aufweist. In dem Düsenkörper 10 befindet sich die in Längsrichtung verschiebbare Düsennadel 13, deren vordere Spitze 14 im Schließzustand gegen einen Sitz 15 im vorderen Bereich 16' des Kraftstoffkanals 16 drückt und hierdurch den Kraftstoffkanal 16 verschließt. Der Kraftstoffkanal 16 weist einen rückwärtigen Abschnitt 16" auf, der seitlich neben der Bohrung für die Düsennadel 13 verläuft und bei zurückgezogener Düsennadel 13 mit dem Abschnitt 16' in Verbindung steht.

Die Anordnung der Spritzlöcher 11 und 12 ist so gewählt, daß die aus ihnen austretenden Einspritzstrahlen in einem vorgegebenen Abstand vor dem Düsenkörper 10 im Brennraum 17 in einer freien Staufläche 18 aufeinandertreffen.

Im engsten Querschnitt des Spritzloches 12 befindet sich ein Saugschlitz 19, der eine Verbindung mit dem Brennraum 17 herstellt. Dabei saugt der aus dem Spritzloch 12 austretende Einspritzstrahl hochverdichtete Luft über die Schlitzdüse 19 aus dem Brennraum 17 an. Infolge der Sogwirkung dieses Einspritzstrahles wird die aus der Schlitzdüse 19 angesaugte Luft beschleunigt und mit hoher Geschwindigkeit zusammen mit dem Kraftstoff in den Brennraum 17 geleitet, wo der infolge der mitgerissenen Luft "weichere Strahl" mit dem "härteren Strahl" aus Spritzloch 11 in einer Ebene 18 aufeinanderprallt.

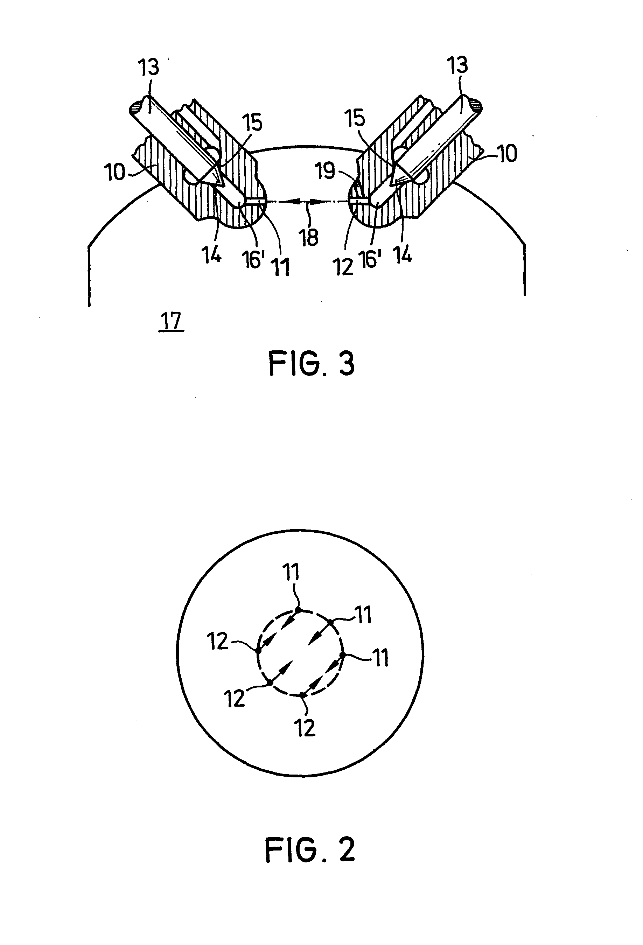

Die Strahleinspritzvorrichtung ist nicht auf zwei paarig einander zugeordnete Spritzlöcher 11 und 12 beschränkt. Vielmehr können mehrere paarig einander zugeordnete Spritzlöcher 11 und 12 (nicht dargestellt) in dem Düsenkörper 10 so untergebracht werden, daß durch unterschiedliche Einspritzwinkel die Einspritzstrahlen in verschiedenen Ebenen 18 im Brennraum 17 aufeinandertreffen. Wie Fig. 2 zeigt, sind bei dem vorliegenden Ausführungsbeispiel drei Paare aus jeweils einem Spritzloch 11 für einen "harten Strahl" und einem Spritzloch 12 für einen "weichen Strahl" entlang eines gedachten Kreises an der Kuppe des Düsenkörpers angeordnet.

Bei Verwendung von zwei Düsenkörpern 10 können diese, wie Fig. 3 zeigt, im Brennraum 17 so angeordnet werden, daß die aus den Spritzlöchern 11 und 12 austretenden Einspritzstrahlen axial aufeinandertreffen, wodurch eine besonders intensive Stauwirkung der zusammenprallenden Kraftstoffstrahlen bewirkt wird. Wahlweise kann hierbei der Saugschlitz 19 in Spritzloch 12 wegfallen, wenn der gesamte Austrittsimpuls der beiden axial aufeinandertreffenden Einspritzstrahlen ausgenutzt werden soll.

## ANSPRÜCHE

1. Strahleinspritzvorrichtung für einen Dieselmotor, insbesondere mit direkter Einspritzung, mit mindestens einem in einen Brennraum (17) hineinragenden Düsenkörper (10), der einen durch eine gesteuert bewegbare Düsennadel (13) absperrbaren und freigebbaren Kanal (16) aufweist, und mit mindestens zwei Spritzlöchern (11,12), deren Flüssigkeitsstrahlen sich im Brennraum vereinigen,
dadurch gekennzeichnet, daß die Spritzlöcher so geneigt oder gegeneinander gerichtet sind, daß die aus ihnen austretenden Flüssigkeitsstrahlen, eine Staufläche bildend, aufeinanderprallen.

2. Strahleinspritzvorrichtung nach Anspruch 1, dadurch gekennzeichnet, daß die Spritzlöcher (11,12) an einem Düsenkörper (10) paarweise angeordnet sind, wobei jedes Paar aus zwei gegeneinander geneigten Spritzlöchern besteht und daß die aus den Spritzlöcherpaaren austretenden Einspritzstrahlen in verschiedenen Ebenen (18) Stauflächen bilden.

3. Strahleinspritzvorrichtung nach Anspruch 1 oder 2, dadurch gekennzeichnet, daß von zwei gegeneinander geneigten Spritzlöchern (11,12) jeweils ein Spritzloch über einen Saugschlitz (19) mit dem Brennraum (17) verbunden ist.

4. Strahleinspritzvorrichtung nach Anspruch 1, dadurch gekennzeichnet, daß bei zwei in den Brennraum (17) hineinragenden Düsenkörpern (10) die Kraftstoffzufuhr von der Einspritzpumpe über eine gemeinsame Einspritzleitung erfolgt und daß die Spritzlöcher (11,12) an beiden Düsenkörpern (10) so angeordnet sind, daß die Einspritzstrahlen beider Düsenkörper aufeinandertreffen.

5. Strahleinspritzvorrichtung nach Anspruch 4, d a d u r c h   g e k e n n z e i c h n e t,   daß die Spritzlöcher (11,12) der beiden Düsenkörper (10) so angeordnet sind, daß die aus ihnen austretenden Einspritzstrahlen axial aufeinandertreffen.

FIG. 1

**FIG. 3**

**FIG. 2**